# EUROPÄISCHE PATENTSCHRIFT

(11) **EP 3 157 778 B1**
(45) Veröffentlichungstag und Bekanntmachung des Hinweises auf die Patenterteilung: **08.04.2020**
(21) Anmeldenummer: 15739504.7
(22) Anmeldetag: 18.06.2015
(51) Int. Cl.: B60N 2/885, B60N 2/02

(54) **KOPFSTÜTZE FÜR EINEN FAHRZEUGSITZ**
HEAD RESTRAINT FOR A VEHICLE SEAT
APPUI-TÊTE POUR SIÈGE DE VÉHICULE

(30) Priorität: 18.06.2014 DE 102014008709
(43) Veröffentlichungstag der Anmeldung: 26.04.2017
(73) Patentinhaber: GRAMMER AG, 92224 Amberg (DE)
(72) Erfinder: BÖSL, Manuel, 92272 Freundenberg (DE)
(74) Vertreter: Roche, von Westernhagen & Ehresmann
(86) Internationale Anmeldenummer: PCT/DE2015/000298
(87) Internationale Veröffentlichungsnummer: WO 2015/192825

(56) Entgegenhaltungen:
- FR-A1- 2 811 949

## Beschreibung

Die Erfindung betrifft eine Kopfstütze.

In der DE 102 34 844 B4 ist eine Kopfstütze beschrieben, die mit einem Seitenkopfpolster versehen ist. Das Seitenkopfpolster ist mittels eines Stellantriebs aus einer Gebrauchsposition, in welcher sich das Seitenkopfpolster in einem seitlichen Kopfbereich befindet, in eine außerhalb des seitlichen Kopfbereichs befindliche Nichtgebrauchsposition verstellbar.

In der DE 10 2012 006 607 A1 ist ein Kissen beschrieben, welches einen Grundkörper und wenigstens ein Halteelement zur Befestigung des Kissens an einem Bauteil des Fahrzeugs, wie z.B. der Kopfstütze. Der Kopf des Sitzinsassen ist dann seitlich an einem Abstützbereich des Kissens abstützbar.

Die DE 195 28 716 C2 beschreibt eine Kopfstütze für einen Fahrzeugsitz. Die Kopfstütze umfasst ein mittels Tragstangen an der Rückenlehne gelagertes Kopfpolster mit zwei dem Kopfpolster zugeordneten Schlummerwangen, die zwischen einem oberen und einem unteren Polsterwulst angeordnet sind. In einer Gebrauchsposition stehen die Schlummerwangen seitlich über eine Polsterfront des Kopfpolsters vor. In der Nichtgebrauchsposition sind sie innerhalb der Kontur des Kopfpolsters aufgenommen. Jede der Schlummerwangen umfasst einen quaderförmigen Polstergrundkörper und ein gepolstertes Keilstück. In der Nichtgebrauchsposition überlappen sich die beiden Schlummerwangen, so dass keine ebene Anlagefläche gebildet ist. Die FR 2 811 949 A1 zeigt eine Kopfstütze für einen Fahrzeugsitz mit einem Kopfteil welches einen Grundkörper und einen Flügel umfasst, wobei der Flügel relativ zu dem Grundkörper zwischen einer ersten Position und einer zweiten Position bewegbar ist und wobei in der ersten Position wenigstens eine Außenfläche des Flügels eine erste Kopfanlagefläche wenigstens teilweise ausbildet.

Es ist Aufgabe der Erfindung eine Ruhe-Kopfstütze zu schaffen, welche zwischen einer Gebrauchs- und einer Ruhelage verstellbar ist und welche in der Ruhelage mit einer großen Anlagefläche versehen ist. Die Kopfstütze soll ferner einen einfachen Aufbau aufweisen, wobei in der Gebrauchslage die Anlagefläche der Kopfstütze hinsichtlich des Sicherheitsaspekts und hinsichtlich eines optischen Aspekts hohen Anforderungen genügen soll.

Die Aufgabe wurde gelöst durch eine Kopfstütze mit den Merkmalen des Anspruchs 1.

Die erfindungsgemäße Kopfstütze umfasst ein Kopfteil mit einem Grundkörper und einem Flügel. Die Kopfstütze weist also z.B. lediglich einen Flügel auf. Der Grundkörper ist z.B. relativ zu der wenigstens einen Tragstange unbewegbar an der Tragstange befestigt. Der Grundköper kann aber z.B. relativ zu einer Rückenlehne, an welcher die Kopfstütze befestigt ist, verstellbar sein. Der Flügel ist relativ zu dem Grundkörper zwischen einer ersten Position und einer zweiten Position bewegbar, insbesondere schwenkbar. Die Kopfstütze kann z.B. mit einem Schwenkgelenk zwischen dem Flügel und dem Grundteil versehen sein. In der ersten Position bildet wenigstens eine Außenfläche des Flügels eine erste Kopfanlagefläche wenigstens teilweise aus. Die Kopfanlagefläche kann z.B. auch Flächen umfassen, welche nicht von der Außenfläche des Flügels bereitgestellt sind. Z.B. kann die Kopfanlagefläche in der ersten Position des Flügels von der Außenfläche und von einer Fläche des Grundkörpers gebildet sein. In der zweiten Position wird von wenigstens einer Grundfläche des Grundkörpers und wenigstens einer Innenfläche des Flügels eine zweite Kopfanlagefläche bereitgestellt.

Ein Vorteil der erfindungsgemäßen Kopfstütze besteht darin, dass in der ersten Position die Kopfanlagefläche in einem mittleren Bereich nicht durch einen Spalt unterbrochen wird. In der zweiten Position des Flügels wird aufgrund der großen Länge des Flügels eine große seitliche Anlagefläche gebildet, woran sich der Sitzinsasse z.B. zum Ruhen anlehnen kann. Dennoch bietet die Kopfstütze auch in der zweiten Position ein hinteres Widerlager.

Der Flügel ist z.B. in der ersten Position derart angeordnet, dass die Grundfläche zumindest teilweise von dem Flügel unzugänglich verdeckt ist. Das ist z.B. der Fall, wenn der Grundkörper eine Aussparung bildet und der Flügel eine komplementäre Form aufweist, so dass der Flügel in der ersten Position derart in die Aussparung integriert ist, dass er die Grundfläche verdeckt.

Auf wenigstens einem Teil der zweiten Kopfanlagefläche ist z.B. ein Kissen angeordnet. Das Kissen kann z.B. lösbar und wiederbefestigbar sein, um das Kissen auszuwechseln oder zu reinigen. In der zweiten Position ist das Kissen z.B. zwischen dem Flügel und dem Grundkörper angeordnet, so dass es z.B. nicht sichtbar ist.

Eine Bereich des Grundkörpers, welcher zumindest teilweise die Mittelfläche ausbildet, ist z.B. in horizontale Richtungen vor- und zurückverlagerbar. Die Verlagerung kann z.B. durch Mittel erfolgen, welche bei einer Bewegung des Flügels zwischen der ersten und der zweiten Position wenigstens den Bereich vor- und zurückverlagern. D.h. bei der Bewegung in die zweite Positioin wird der Bereich z.B. vorverlagert und bei der Bewegung in die erste Position wird der Bereich zurückverlagert. Alternativ könnten z.B. die Mittel anstelle des Bereichs des Grundkörpers lediglich das Kissen bei der Bewegung in die zweite Position vorverlagern und bei der Bewegung in die erste Position zurückverlagern.

Der Grundkörper bildet z.B. in wenigstens einem Randbereich einen Vorsprung, wobei der Vorsprung eine Stirnfläche aufweist, welche in der ersten Position mit der Außenfläche des Flügels eine Kopfanlagefläche ausbildet. Der Vorsprung ist z.B. lediglich in einem Flankenbereich des Kopfteils ausgebildet. Der Flügel stellt dann z.B. zusammen mit einer Stirnfläche des Vorsprungs die Kopfanlagefläche bereit. Gemäß einer alternativen Ausführung sind in beiden Flankenbereichen des Kopfteils Vorsprünge ausgebildet. Der Flügel ist dann z.B. in der ersten Position zwischen den Vorsprüngen angeordnet und bildet mit Stirnflächen beider Vorsprünge die Kopfanlagefläche. Zusätzlich oder alternativ zu den vorerwähnten Beispielen kann das Kopfteil in einem unteren Bereich einen sich horizontal erstreckenden Vorsprung umfassen, der in der ersten Position mit dem Flügel die Kopfanlagefläche bereitstellt. In der zweiten Position bildet der Vorsprung in dem unteren Bereich z.B. eine Nackenstütze.

Der Flügel ist z.B. derart komplementär zu dem Grundteil ausgebildet, dass in der ersten Position wenigstens eine Fläche des Flügels bündig ist mit mindestens einer Fläche des Grundkörpers. Insbesondere sind die Außenfläche des Flügels und die Stirnfläche des wenigstens einen Vorsprungs in der ersten Position bündig miteinander. Weist der Grundkörper an beiden Seiten Vorsprünge auf, kann der Flügel in der ersten Position z.B. zwischen den Vorsprüngen eintauchen. Eine Außenfläche des Flügels ist dann z.B. bündig ist mit den Stirnflächen der Vorsprünge.

Die Grundfläche umfasst z.B. eine Mittelfläche, wobei die Mittelfläche in der zweiten Position ein hinteres Widerlager bildet, welches entgegen der Sitzrichtung gerichtete Kräfte aufnehmen kann. Als Sitzrichtung wird im Sinne der Erfindung die Richtung bezeichnet, in welche der Sitzinsasse ohne Verdrehung des Kopfes schaut. Die Sitzrichtung entspricht z.B. bei den meisten PKW der Fahrtrichtung.

Die Grundfläche umfasst z.B. wenigstens in dem Bereich des Vorsprungs mindestens eine Seitenfläche, die in der zweiten Position ein seitliches Widerlager bildet, welches Kräfte aufnehmen kann, die rechtwinklig zur Sitzrichtung gerichtet sind. Z.B. sind in beiden Flankenbereichen des Grundkörpers Vorsprünge vorhanden, die bezüglich der Mittelfläche vorragen und jeweils eine Seitenfläche aufweisen. Es sind in diesem Fall zwei seitliche Widerlager vorhanden, so dass rechtwinklig zur Sitzrichtung gerichtete Kräfte zu beiden Seiten aufgenommen werden können.

In der zweiten Position bildet die Innenfläche z.B. ein seitliches Widerlager, welches Kräfte aufnehmen kann, die rechtwinklig zur Sitzrichtung gerichtet sind. Die Innenfläche kann alternativ oder zusätzlich zu der Seitenfläche, die von dem wenigstens einen Vorsprung des Grundkörpers gebildet ist, rechtwinklig zur Sitzrichtung gerichtete Kräfte aufnehmen.

Die Grundfläche weist z.B. einen horizontal verlaufenden Vorsprung auf. Der horizontal verlaufende Vorsprung befindet sich z.B. in einem unteren Bereich des Grundkörpers, insbesondere in einem unteren Endbereich. Der horizontale Vorsprung kann z.B. in der zweiten Position eine Nackenstütze bilden. Der Vorsprung ist beispielsweise von einem Polsterwulst gebildet. In der ersten Position ist der Vorsprung z.B. bündig mit der Außenfläche des Flügels. Indem der Nacken des Sitzinsassen gestützt wird, erhöht sich der Komfort.

Der Flügel weist z.B. eine Höhe auf, die etwa der Höhe des Grundkörpers entspricht. In diesem Fall wird bei der Bewegung des Flügels von der ersten Position in die zweite Position wenigstens ein sich über die gesamte Höhe des Kopfteils erstreckender Teil der ersten Kopfanlagefläche bewegt. In einer speziellen Ausführungsform wird die gesamte erste Kopfanlagefläche bewegt. Z.B. entspricht die Höhe des Flügels der Höhe der Mittelfläche. In diesem Fall wird die Mittelfläche in der ersten Position vollständig von dem Flügel verdeckt.

Eine Breite des Flügels entspricht z.B. mindestens 2/3 der Breite des Grundkörpers. Die Breite des Flügels entspricht z.B. der gesamten Breite des Grundkörpers. Gemäß einer alternativen Ausführungsform entspricht die Breite des Flügels lediglich einem Teil der Breite des Grundkörpers. In diesem Fall kann der Grundkörper den Flügel nur auf einer Seite oder auch beidseitig überragen. Aufgrund der großen Länge des Flügels ergibt sich in der zweiten Position eine große seitliche Anlagefläche.

Weitere Vorteile der Erfindung ergeben sich anhand von in den schematischen Fig. dargestellten Ausführungsbeispielen. Es zeigen:
Fig. 1 eine perspektivische Darstellung einer ersten Ausführungsform der Kopfstütze, wobei sich ein Flügel relativ zu einem Grundkörper in der ersten Position befindet,
Fig. 2 in Anlehnung an Fig. 1 eine perspektivische Darstellung, wobei der Flügel in der zweiten Position angeordnet ist,
Fig. 3 eine Frontansicht der Kopfstütze mit Flügel in der ersten Position,
Fig. 4 in Anlehnung an Fig. 3 die Kopfstütze mit Flügel in der zweiten Position,
Fig. 5 eine Draufsicht auf die Kopfstütze gemäß Ansichtspfeil V in Fig. 3,
Fig. 6 eine Draufsicht auf die Kopfstütze gemäß Ansichtspfeil VI in Fig. 4,
Fig. 7 eine Schnittdarstellung gemäß Schnittlinie VII - VII in Fig. 3,
Fig. 8a eine Schnittdarstellung gemäß Schnittlinie VIIIa - VIIIa in Fig. 4,
Fig. 8b in Anlehnung an Fig. 8a eine zweite Ausführungsform der Kopfstütze, welche eine Variante der ersten Ausführungsform darstellt,
Fig. 9 eine perspektivische Darstellung einer dritten Ausführungsform der Kopfstütze, wobei sich der Flügel in der ersten Position befindet,
Fig. 10 in Anlehnung an Fig. 9 eine perspektivische Darstellung, wobei der Flügel in der zweiten Position angeordnet ist,
Fig. 11 eine Frontansicht der Kopfstütze gemäß Fig. 1 mit Flügel in der ersten Position,
Fig. 12 in Anlehnung an Fig. 11 die Kopfstütze mit Flügel in der zweiten Position,
Fig. 13 eine Draufsicht auf die Kopfstütze gemäß Ansichtspfeil XIII in Fig. 11,
Fig. 14 eine Draufsicht auf die Kopfstütze gemäß Ansichtspfeil XIV in Fig. 12.

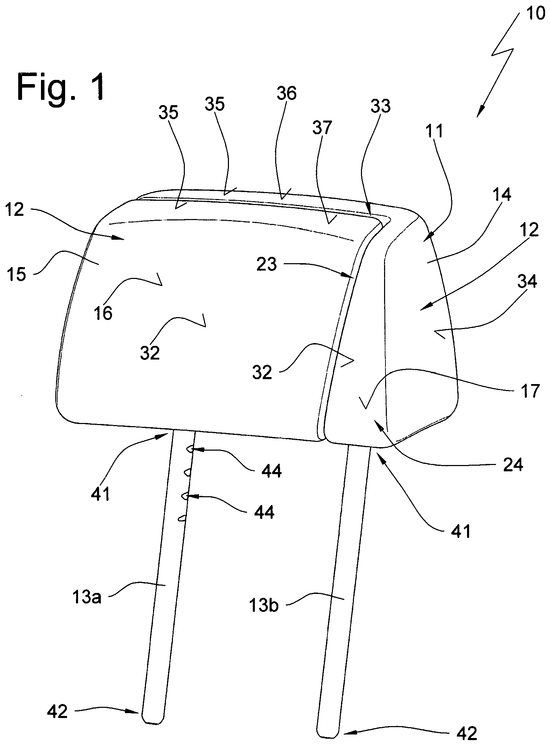

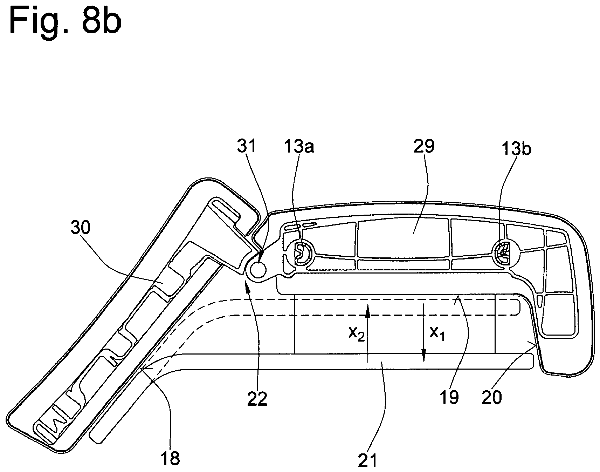

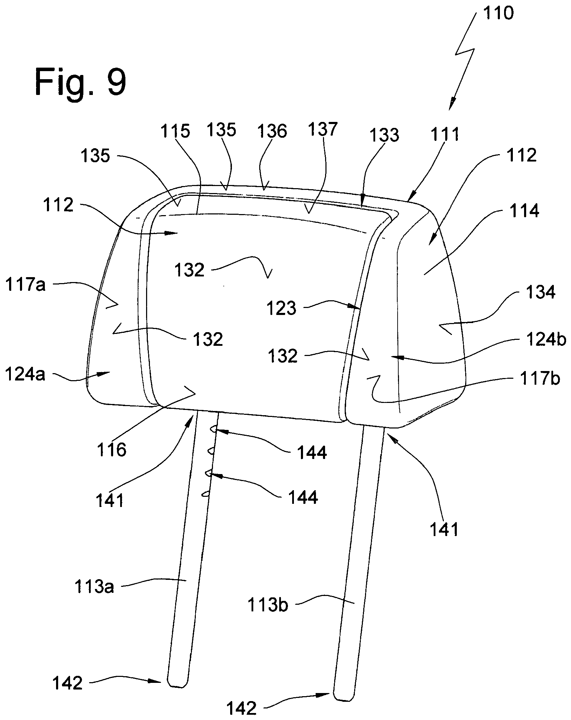

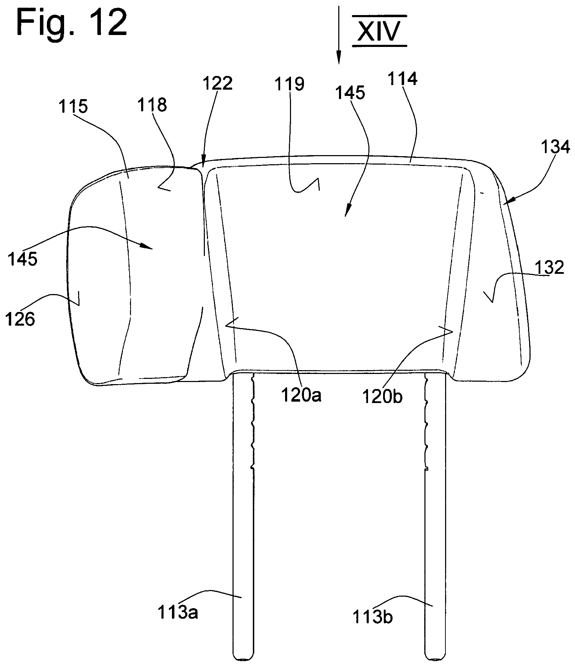

Ein erstes Ausführungsbeispiel ist in den Fig. 1 bis 8a, ein zweites Ausführungsbeispiel in Fig. 8b und ein drittes Ausführungsbeispiel in den Fig. 9 bis 14 dargestellt. Eine Kopfstütze entsprechend dem ersten und dem zweiten Ausführungsbeispiel wird insgesamt in den Fig. mit dem Bezugszeichen 10 bezeichnet. Eine Kopfstütze entsprechend dem dritten Ausführungsbeispiel wird insgesamt in den Fig. mit dem Bezugszeichen 110 bezeichnet. Gleiche Bezugszeichen in den unterschiedlichen Fig. bezeichnen, auch wenn kleine Buchstaben hinzugefügt oder weggelassen sind, entsprechende Teile.

Gemäß Fig. 1 umfasst die Kopfstütze 10 ein Kopfteil 11 mit einem Polster 12. Das Kopfteil 11 ist an einem ersten Endbereich 41 von Tragstangen 13a und 13b befestigt. Ein zweiter Endbereich 42 jeder Tragstange 13a und 13b ist in einer nicht dargestellten rückenlehnenfesten Lageraufnahme eines Fahrzeugsitzes z.B. höhenverstellbar befestigbar. Die Tragstangen 13a und 13b weisen Kerben 44 auf, die Teil einer Verriegelungsvorrichtung sind, mittels welcher die Tragstangen 13a und 13b in der eingestellten Relativposition zu der Lageraufnahme verriegelbar sind. Auf diese Weise ist die Kopfstütze 10 relativ zu dem Fahrzeugsitz höhenverstellbar.

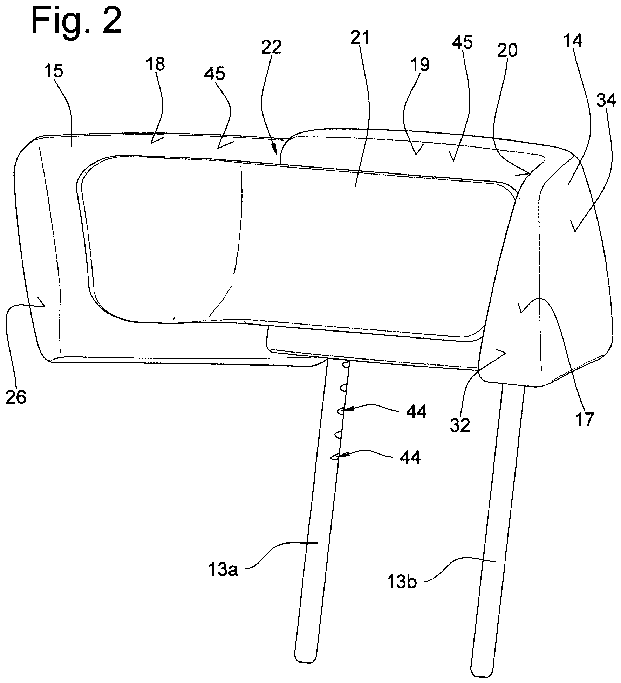

Das Kopfteil 11 umfasst einen Grundkörper 14 und einen Flügel 15, welcher relativ zu dem Grundkörper 14 zwischen einer ersten, eingefalteten Position (siehe z.B. Fig. 1) und einer zweiten, ausgestreckten Position (siehe z.B. Fig. 2) schwenkbar ist. Aus der ersten Position kann der Flügel 15 in Richtung u1 in die zweite Position geschwenkt werden und aus der zweiten Position kann der Flügel 15 in Richtung u2 in die erste Position geschwenkt werden. In der ersten Position gemäß Fig. 1 bildet der Flügel 15 einen Teil des Volumens des Kopfteils 11. Der Grundkörper ist mit einer Aussparung 33 versehen, in welche der Flügel 15 in der ersten Position eingepasst ist.

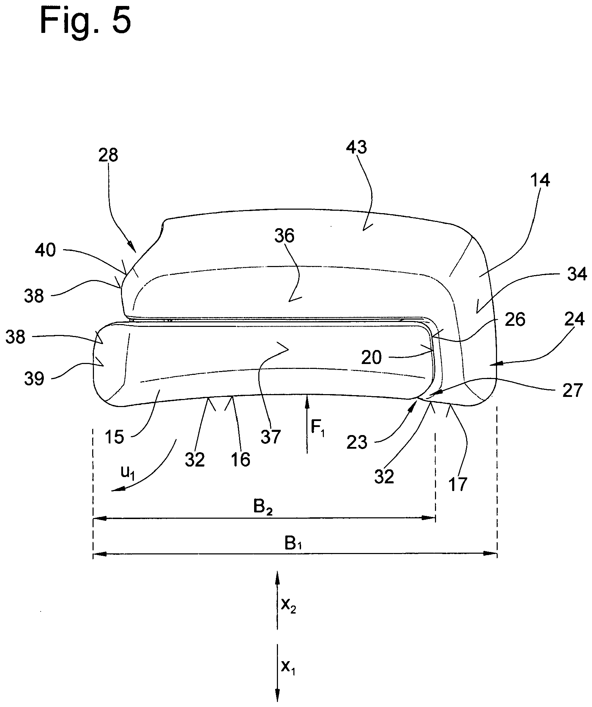

Eine Außenfläche 16 des Flügels 15 bildet in der ersten Position einen Teil einer ersten Kopfanlagefläche 32 aus. Ein weiterer Teil der Kopfanlagefläche 32 wird von einer Stirnfläche 17 gebildet, welche an einem Vorsprung 24 des Grundkörpers 14 ausgebildet ist. Die Außenflächen 16 und 17 verlaufen bündig zueinander, so dass der stetige Verlauf der ersten Kopfanlagefläche 32 lediglich durch einen schmalen Spalt 23 zwischen dem Flügel 15 und dem Grundkörper 14 geringfügig unterbrochen ist. Aufgrund der Länge des Flügels 15 ist der Spalt 23 außermittig auf der Kopfanlagefläche 32 angeordnet. In der ersten Position kann die erste Kopfanlagefläche 32 Kräfte F1 aufnehmen, die in Richtung x2 gerichtet sind (siehe z.B. Fig. 5).

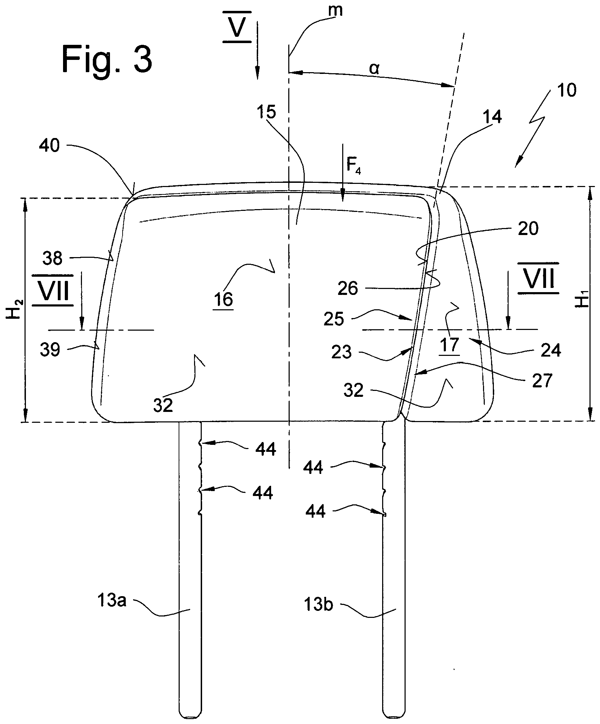

Eine erste Flankenfläche 34 des Kopfteils 11 ist gemäß Fig. 1 vollständig von dem Grundkörper 14 ausgebildet während eine obere Fläche 35 von einer L-förmigen Fläche 36 des Grundkörpers 14 und einer etwa rechteckförmigen Fläche 37 des Flügels 15 gebildet ist. Eine zweite Flankenfläche 38 (siehe z.B. Fig. 3) umfasst eine Fläche 39 des Flügels 15 sowie eine Fläche 40 des Grundkörpers 14. Eine rückwärtige Fläche 43 des Kopfteils 11 ist vollständig von dem Grundkörper 14 bereitgestellt.

Da eine Höhe H2 des Flügels 15 etwa gleich ist mit der Höhe H1 des Grundkörpers 14, ist auch eine untere Fläche des Kopfteils 11 von einer etwa rechteckförmigen Fläche des Flügels 15 und einer etwa L-förmigen Fläche des Grundkörpers 14 gebildet.

Gemäß Fig. 3 ist die Kopfanlagefläche 32 wesentlich von der Außenfläche 16 und nur in einem schmalen Bereich auf der rechten Seite von der Außenfläche 17 gebildet. In Fig. 3 ist außerdem zu erkennen, dass eine Stirnfläche 26 eines freien Endes 25 des Flügels 15 sowie eine Seitenfläche 20 mit einer Längsmittelachse m des Kopfteils 11 einen spitzen Winkel α bilden so dass bei einer Kraft F4, die von oben auf den Flügel 15 wirkt, die Stirnfläche 26 sich an der Seitenfläche 20 abstützen kann.

In Fig. 5 ist erkennbar, dass der Vorsprung 24 einen Haltebereich 27 umfasst, welcher sich in der Schwenkbahn des Flügels 15 befindet. Auf diese Weise wird verhindert, dass sich der Flügel 15 ungewollt von der ersten Position in die zweite Position verstellt. Der Haltebereich 27 ist von einem Teil des Polsters 12 gebildet und daher elastisch verformbar, so dass der Flügel 15 entgegen einem Widerstand, welcher zur Verformung des Haltebereichs 27 notwendig ist, zwischen der ersten und der zweiten Position verstellbar ist.

Außerdem ist in Fig. 5 erkennbar, dass ein Bereich 28 an dem Grundkörper 14 ausgespart ist, damit an dieser Stelle die Schwenkbahn des Flügels 15 frei ist und nicht durch das Polster 12 behindert wird. In Fig. 5 ist ferner zu sehen, dass in der ersten Position die Gesamtbreite B1 des Kopfteils 11 mit der Breite B2 des Flügels 15 ein Verhältnis von etwa 7/6 bildet.

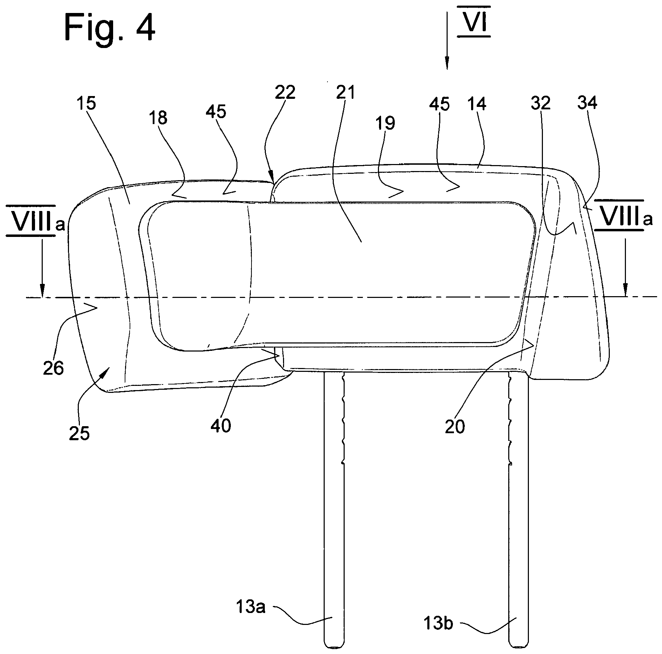

In der zweiten Position ist gemäß der Fig. 2 und 4 eine zweite Kopfanlagefläche 45 von einer Innenfläche 18 des Flügels 15 sowie von einer Mittelfläche 19 des Grundkörpers 14 und der Seitenfläche 20 des Grundkörpers 14 gebildet. Auf den Flächen 18 und 19 ist in dem vorliegenden Ausführungsbeispiel zur Erhöhung des Komforts ein Kissen 21 angeordnet, welches einen zwischen dem Flügel 15 und dem Grundkörper 14 in der zweiten Position gebildeten Eckbereich 22 überspannt. Das Kissen 21 kann mit geeigneten Befestigungen, wie Druckknopf oder Klettverschluss, an den Flächen 18 und 19 befestigt sein.

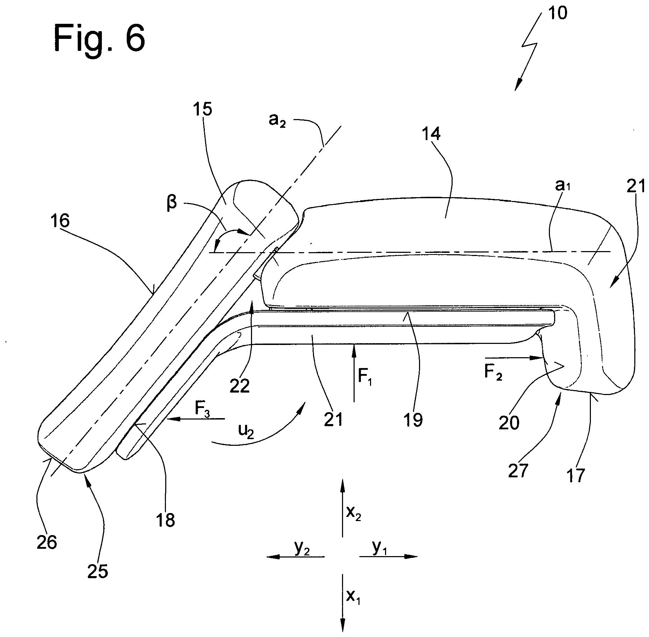

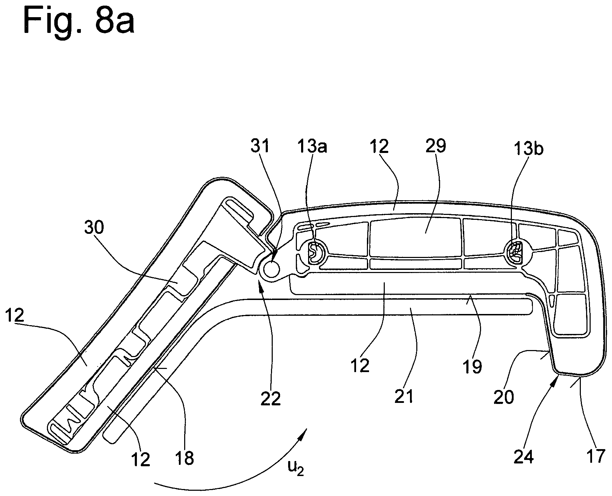

Gemäß der Fig. 6 und 8a bildet eine Mittelachse a2 des Flügels 15 mit einer Mittelquerachse a1 des Grundkörpers 14 einen stumpfen Winkel β. In der zweiten Position kann die zweite Kopfanlagefläche 45 Kräfte F1, F2 und F3 aufnehmen, wobei die Kräfte F1 in Richtung x2, die Kräfte F2 in Richtung y1 und die Kräfte F3 in Richtung y2 wirken. Die Richtungen y1 und y2 sind senkrecht zu x1 und x2 gerichtet. Es wird deutlich, dass die Innenfläche 18 eine große seitliche Anlagefläche für den Sitzinsassen bildet.

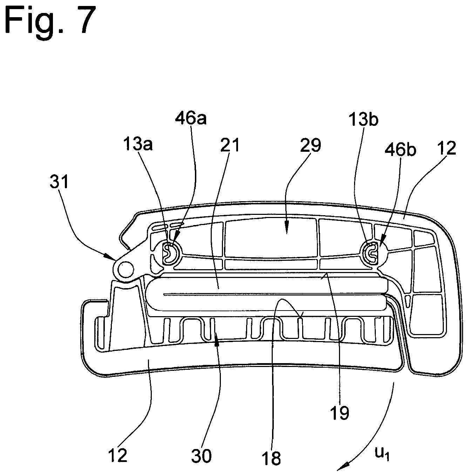

In den Schnittdarstellungen gemäß der Fig. 7 und 8a sind ein Basisrahmen 29 sowie ein Flügelrahmen 30 zu erkennen. Der Basisrahmen 29 bildet mit dem Flügelrahmen 30 ein Scharniergelenk 31. Die Tragstange 13a ist in einem eingeformten Lagersitz 46a und die Tragstange 13b in einem eingeformten Lagersitz 46b des Basisrahmens 29 verdrehsicher aufgenommen. Es ist in Fig. 7 erkennbar, dass das Kissen 21 in der ersten Position eingefaltet zwischen den Innenflächen 18 und 19 angeordnet ist. In der zweiten Position gemäß Fig. 8a ist das Kissen entfaltet und überdeckt den Eckbereich 22 sowie zumindest teilweise die Innenfläche 18 und die Mittelfläche 19.

In Fig. 8b ist als zweites Ausführungsbeispiel eine Variante des ersten Ausführungsbeispiels dargestellt. Dabei ist ein Bereich des Grundkörpers 14, an welchem das Kissen 21 gehalten ist, in Richtung x1 und x2 vor und zurück verlagerbar. Die Kopfstütze 10 umfasst Mittel, welche bei einer Schwenkbewegung des Flügelrahmens 30 von der ersten Position in die zweite Position den Bereich des Grundkörpers 14 und das Kissen 21 aus der in Fig. 7 dargestellten Position in Richtung x1 in die in Fig. 8b dargestellte Position verlagern (siehe durchgezogene Linie des Kissens 21 in Fig. 8b). In Fig. 8b ist die Position des Kissens 21 gemäß dem ersten Ausführungsbeispiel gestrichelt dargestellt, um die Verlagerung zu verdeutlichen. Bei einer entgegengesetzten Schwenkbewegung des Flügelrahmens 30 von der zweiten Position in die erste Position werden der Bereich des Grundkörpers 14 und das Kissen 21 in Richtung x2 in die in Fig. 7 dargestellte Position verlagert.

Die Kopfstütze 110 gemäß dem dritten Ausführungsbeispiel entspricht in wesentlichen Merkmalen dem ersten Ausführungsbeispiel. Die Kopfstütze 110 umfasst ein Kopfteil 111 sowie ein Polster 112. Das Kopfteil 111 ist an einem ersten Endbereich 141 von Tragstangen 113a und 113b befestigt. Ein zweiter Endbereich 142 jeder Tragstange 113a und 113b ist in einer rückenlehnenfesten Lageraufnahme eines nicht dargestellten Fahrzeugsitzes höhenverstellbar befestigbar. Die Tragstangen 113a und 113b weisen Kerben 144 auf. Die Kerben 144 sind Teil einer Verriegelungsvorrichtung, mittels welcher die Tragstangen 113a und 113b in der eingestellten Relativposition zu der Lageraufnahme verriegelbar sind. Die Kopfstütze ist somit relativ zu dem Fahrzeugsitz höhenverstellbar.

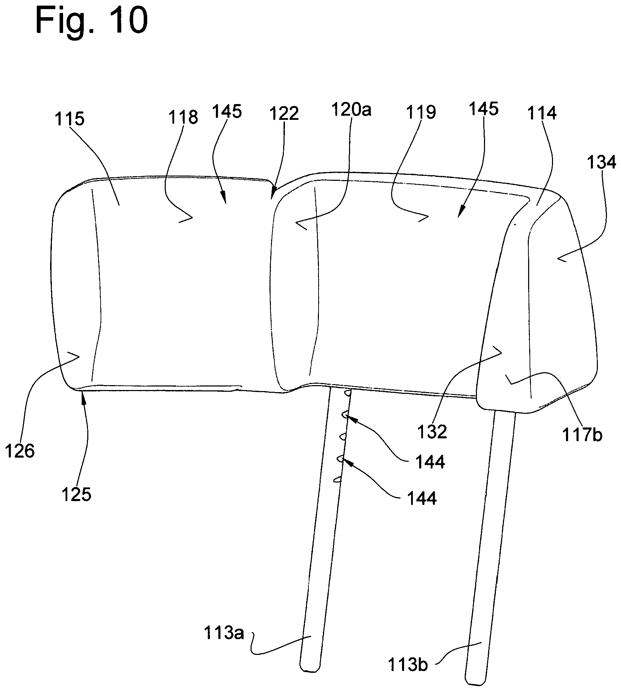

Das Kopfteil 111 umfasst einen Grundkörper 114 und einen Flügel 115, welcher relativ zu dem Grundkörper 114 zwischen einer ersten, eingefalteten Position (siehe z.B. Fig. 9) und einer zweiten, ausgestreckten Position (siehe z.B. Fig. 10) schwenkbar ist. Aus der ersten Position kann der Flügel 115 relativ zu dem Grundkörper 114 in Richtung u1 in die zweite Position geschwenkt werden. Aus der zweiten Position kann der Flügel 115 in Richtung u2 in die erste Position geschwenkt werden. Der Flügel 115 ist z.B. entsprechend den ersten beiden Ausführungsbeispielen mittels eines Gelenks schwenkbar mit dem Grundkörper 114 verbunden. In der ersten Position bildet der Flügel 115 einen Teil des Volumens des Kopfteils 111. Der Grundkörper 114 ist mit einer Aussparung 133 versehen, in welche der Flügel 115 in der ersten Position formschlüssig eingepasst ist. Ein freies Ende 125 des Flügels 115 weist eine Stirnfläche 126 auf.

Eine erste Außenfläche 116 des Flügels 115 bildet in der ersten Position einen Teil einer Kopfanlagefläche 132 aus. Ein weiterer Teil der Kopfanlagefläche 132 wird von den Außenflächen 117a eines Vorsprungs 124a und 117b eines Vorsprungs 124b des Grundkörpers 114 gebildet. Die Außenflächen 116 und 117a sowie 116 und 117b verlaufen bündig zueinander, so dass der stetige Verlauf der Kopfanlagefläche 132 lediglich durch einen schmalen Spalt 123 zwischen dem Flügel 115 und dem Grundkörper 114 geringfügig unterbrochen ist.

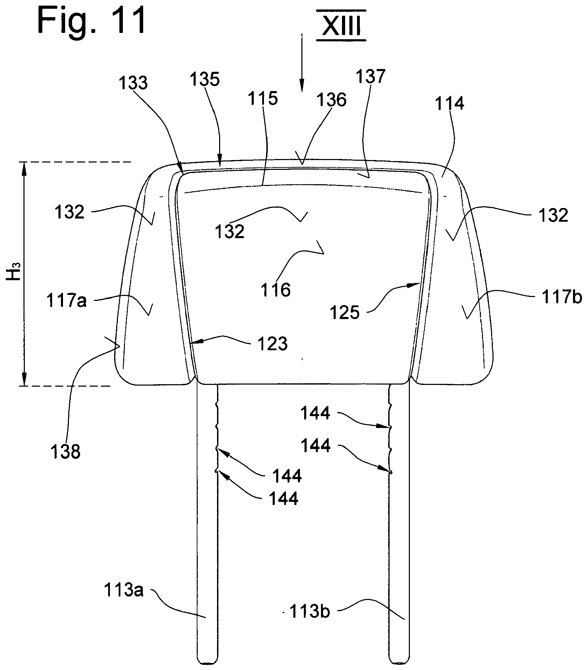

Eine erste Flankenfläche 134 und eine zweite Flankenfläche 138 sowie eine rückwärtige Fläche 143 des Kopfteils 11 sind gemäß Fig. 1 von dem Grundkörper 14 ausgebildet während eine obere Fläche 135 von einer U-förmigen Fläche 136 des Grundkörpers 14 und einer etwa rechteckförmigen Fläche 137 des Flügels 15 gebildet ist. Der Flügel 115 erstreckt sich gemäß Fig. 11 im Wesentlichen über die gesamte Höhe H3 des Kopfteils 111.

Gemäß Fig. 11 ist die erste Kopfanlagefläche 132 wesentlich von der Außenfläche 116 des Flügels 115 und nur in schmalen Bereichen auf der rechten Seite und der linken Seite von den Außenflächen 117a und 117b gebildet.

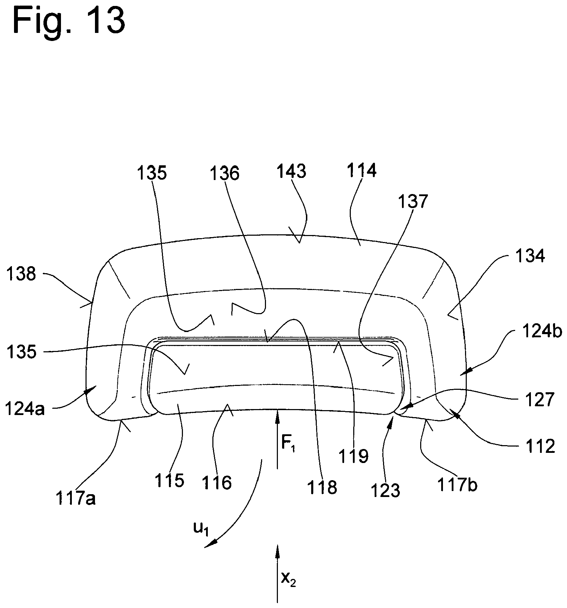

In Fig. 13 ist erkennbar, dass der Vorsprung 124b einen Haltebereich 127 umfasst, welcher sich in der Schwenkbahn des Flügels 115 befindet. Auf diese Weise wird verhindert, dass sich der Flügel 15 ungewollt von der ersten Position in die zweite Position verstellt. Der Haltebereich 127 ist von einem Teil des Polsters 112 gebildet und daher elastisch verformbar, so dass der Flügel 115 gegen entgegen einem Widerstand, welcher zur Verformung des Haltebereichs 127 notwendig ist, zwischen der ersten und der zweiten Position verstellbar ist. Gemäß Fig. 13 kann die erste Kopfanlagefläche 132 Kräfte F1 aufnehmen, die in Richtung x2 gerichtet sind.

In der zweiten Position ist gemäß der Fig. 10, 12 und 14 ist eine zweite Kopfanlagefläche 145 von einer Innenfläche 118 des Flügels 115 sowie von einer Mittelfläche 119 und einer ersten Seitenfläche 120a sowie einer zweiten Seitenfläche 120b des Grundkörpers 114 gebildet. Auf den Flächen 118 und 119 kann z.B. in dem vorliegenden Ausführungsbeispiel entsprechend dem ersten Ausführungsbeispiel zur Erhöhung des Komforts ein Kissen angeordnet sein, welches einen in der zweiten Position zwischen dem Flügel 115 und dem Grundkörper 114 gebildeten Eckbereich 122 überspannt.

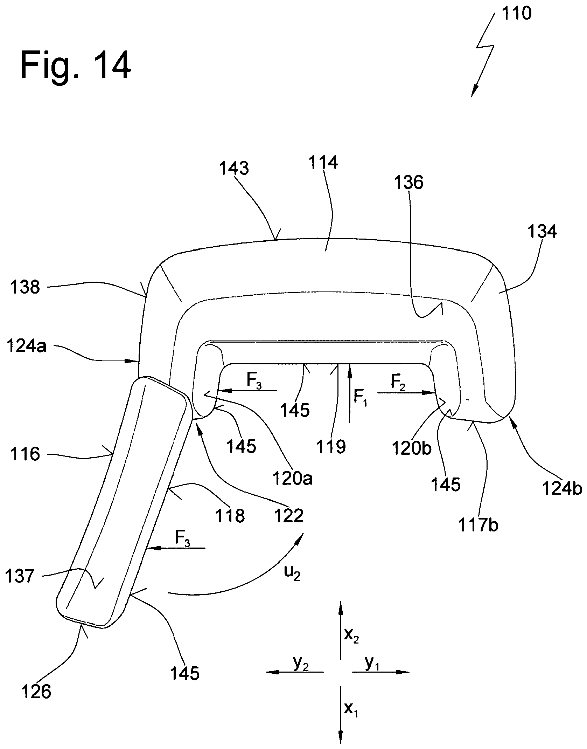

In Fig. 14 ist ferner zu sehen, dass sich die Innenfläche 120a und die Innenfläche 118 des Flügels 115 zu einer großen seitlichen Anlagefläche ergänzen. Die Innenfläche 118 und die erste Seitenfläche 120a können Kräfte F3 aufnehmen, die in Richtung y2 gerichtet sind. Die zweite Seitenfläche 120b kann Kräfte F2 aufnehmen, die in Richtung y1 gerichtet sind und die Mittelfläche 119 kann Kräfte F1 aufnehmen, die in Richtung x2, d.h. entgegen der Sitz- und Fahrtrichtung x1, gerichtet sind.

## Patentansprüche

1. Kopfstütze für einen Fahrzeugsitz mit einem Kopfteil (11) welches einen Grundkörper (14) und einen Flügel (15) umfasst, wobei der Grundkörper (14) an Tragstangen (13a, 13b) befestigt ist und wobei der Flügel (15) relativ zu dem Grundkörper (14) zwischen einer ersten Position und einer zweiten Position bewegbar ist und wobei in der ersten Position wenigstens eine Außenfläche (16) des Flügels (15) eine erste Kopfanlagefläche (32) wenigstens teilweise ausbildet, **dadurch gekennzeichnet, dass** in der ersten Position eine Grundfläche (19, 20, 119, 120a, 120b) des Grundkörpers (14) zumindest teilweise von dem Flügel (15) unzugänglich verdeckt ist, und dass in der zweiten Position wenigstens die Grundfläche (19, 20, 119, 120a, 120b) des Grundkörpers (14) und wenigstens eine Innenfläche (18) des Flügels (15) eine zweite Kopfanlagefläche (45) ausbilden.

2. Kopfstütze nach Anspruch 2, **dadurch gekennzeichnet, dass** die Grundfläche (19, 20) in der ersten Position von dem Flügel (15) unzugänglich verdeckt ist.

3. Kopfstütze nach einem der vorangehenden Ansprüche, **dadurch gekennzeichnet, dass** auf wenigstens einem Teil der zweiten Kopfanlagefläche (45) ein Kissen (21) angeordnet ist.

4. Kopfstütze nach einem der vorangehenden Ansprüche, **dadurch gekennzeichnet, dass** eine Mittelfläche (19) des Grundkörpers (14) in horizontale Richtungen (x1, x2) vor- und zurückverlagerbar ist.

5. Kopfstütze nach einem der vorangehenden Ansprüche, **dadurch gekennzeichnet, dass** der Grundkörper (14) in wenigstens einem Flankenbereich mindestens einen Vorsprung (24) bildet und dass der Vorsprung eine Stirnfläche (17) umfasst, welche in der ersten Position mit der Außenfläche (16) die erste Kopfanlagefläche (32) ausbildet.

6. Kopfstütze nach einem der vorangehenden Ansprüche, **dadurch gekennzeichnet, dass** der Flügel (15) derart komplementär zu einem Bereich des Grundkörpers (14) ausgebildet ist, dass in der ersten Position wenigstens eine Fläche (16, 37) des Flügels bündig ist mit mindestens einer Fläche (17, 36) des Grundkörpers (14).

7. Kopfstütze nach einem der vorangehenden Ansprüche, **dadurch gekennzeichnet, dass** die Grundfläche eine Mittelfläche (19) umfasst, wobei die Mittelfläche (19) in der zweiten Position ein hinteres Widerlager bildet, welches in Richtung (x2) wirkende Kräfte (F1) aufnehmen kann, die entgegen der Sitzrichtung (x1) gerichtet sind.

8. Kopfstütze nach einem der vorangehenden Ansprüche, **dadurch gekennzeichnet, dass** die Grundfläche wenigstens in dem Bereich des Vorsprungs (24, 124a, 124b) mindestens eine Seitenfläche (20, 120a, 120b) umfasst, die in der zweiten Position ein seitliches Widerlager bildet, welches in Richtung (y1) wirkende Kräfte (F2) aufnehmen kann, die rechtwinklig zur Sitzrichtung (x1) gerichtet sind.

9. Kopfstütze nach einem der vorangehenden Ansprüche, **dadurch gekennzeichnet, dass** in der zweiten Position die Innenfläche (18) ein seitliches Widerlager bildet, welches in Richtung (y2) wirkende Kräfte (F3) aufnehmen kann, die rechtwinklig zur Sitzrichtung (x1) gerichtet sind.

10. Kopfstütze nach einem der vorangehenden Ansprüche, **dadurch gekennzeichnet, dass** eine Mittelfläche (19) des Grundkörpers (14) einen horizontal vorragenden Vorsprung aufweist.

11. Kopfstütze nach einem der vorangehenden Ansprüche, **dadurch gekennzeichnet, dass** der Flügel (15) eine Breite (B2) aufweist, die mindestens 2/3 der Breite (B1) des Grundkörpers (14) entspricht.

## Claims

1. Head restraint for a vehicle seat with a head part (11) which comprises a main body (14) and a folding part (15), wherein the main body (14) is fastened to support rods (13a, 13b) and wherein the folding part (15) can be moved relative to the main body (14) between a first position and a second position and wherein, in the first position, at least one outer surface (16) of the folding part (15) at least partially forms a first head contact surface (32), **characterised in that**, in the first position, a main surface (19, 20, 119, 120a, 120b) of the main body (14) is at least partially concealed by the folding part (15) so as to be inaccessible and **in that**, in the second position, at least the main surface (19, 20, 119, 120a, 120b) of the main body (14) and at least one inner surface (18) of the folding part (15) form a second head contact surface (45).

2. Head restraint according to claim 2, **characterised in that** the main surface (19, 20) is concealed in the first position by the folding part (15) so as to be inaccessible.

3. Head restraint according to any one of the preceding claims, **characterised in that** a cushion (21) is arranged on at least one part of the second head contact surface (45) .

4. Head restraint according to any one of the preceding claims, **characterised in that** a middle surface (19) of the main body (14) can be shifted forwards and backwards in horizontal directions (x1, x2).

5. Head restraint according to any one of the preceding claims, **characterised in that** the main body (14), in at least one flank region, forms at least one projection (24) and **in that** the projection comprises an end surface (17) which, in the first position, forms the first head contact surface (32) with the outer surface (16).

6. Head restraint according to any one of the preceding claims, **characterised in that** the folding part (15) is formed complementing a region of the main body (14) such that, in the first position, at least one surface (16, 37) of the folding part is flush with at least one surface (17, 36) of the main body (14).

7. Head restraint according to any one of the preceding claims, **characterised in that** the main surface comprises a middle surface (19), wherein the middle surface (19), in the second position, forms a rear counter bearing which can absorb forces (F1) acting in the direction (x2) which are directed counter to the sitting direction (x1).

8. Head restraint according to any one of the preceding claims, **characterised in that** the main surface comprises, at least in the region of the projection (24, 124a, 124b), at least one side surface (20, 120a, 120b) which, in the second position, forms a lateral counter bearing which can absorb forces (F2) acting in the direction (y1) which are directed at right angles to the sitting direction (x1).

9. Head restraint according to any one of the preceding claims, **characterised in that**, in the second position, the inner surface (18) forms a lateral counter bearing which can absorb forces (F3) acting in the direction (y2) which are directed at right angles to the sitting direction (x1).

10. Head restraint according to any one of the preceding claims, **characterised in that** a middle surface (19) of the main body (14) has a horizontally protruding projection.

11. Head restraint according to any one of the preceding claims, **characterised in that** the folding part (15) has a width (B2) which corresponds to at least 2/3 of the width (B1) of the main body (14).

## Revendications

1. Appuie-tête pour un siège d'automobile avec une partie de tête (11) qui comprend un corps de base (14) et une aile (15), dans lequel le corps de base (14) est fixé à des barres de support (13a, 13b), dans lequel l'aile (15) peut se déplacer entre une première position et une deuxième position par rapport au corps de base (14) et dans lequel, dans la première position, au moins une surface extérieure (16) de l'aile (15) constitue au moins partiellement une première surface de contact de tête (32), **caractérisé en ce que**, dans la première position, une surface de base (19, 20, 119, 120a, 120b) du corps de base (14) est masquée de manière inaccessible au moins partiellement par l'aile (15) et **en ce que**, dans la deuxième position, au moins la surface de base (19, 20, 119, 120a, 120b) du corps de base (14) et au moins une surface intérieure (18) de l'aile (15) constituent une deuxième surface de contact de tête (45).

2. Appuie-tête selon la revendication 2, **caractérisé en ce que**, dans la première position, la surface de base (19, 20) est masquée de manière inaccessible par l'aile (15).

3. Appuie-tête selon une des revendications précédentes, **caractérisé en ce qu'**un coussin (21) est disposé au moins sur une partie de la deuxième surface de contact de tête (45).

4. Appuie-tête selon une des revendications précédentes, **caractérisé en ce qu'**une partie centrale (19) du corps de base (14) peut être avancée et reculée dans des directions horizontales (x1, x2).

5. Appuie-tête selon une des revendications précédentes, **caractérisé en ce que** le corps de base (14) forme au moins une proéminence (24) dans au moins une région de flanc et **en ce que** la proéminence comprend une face frontale (17) qui, dans la première position, constitue la première surface de contact de tête (32) avec la surface extérieure (16).

6. Appuie-tête selon une des revendications précédentes, **caractérisé en ce que** l'aile (15) est configurée de façon complémentaire d'une région du corps de base (14), de sorte que, dans la première position, au moins une surface (16, 37) de l'aile est de niveau avec au moins une surface (17, 36) du corps de base (14).

7. Appuie-tête selon une des revendications précédentes, **caractérisé en ce que** la surface de base comprend une surface centrale (19), cette surface centrale (19) formant, dans la deuxième position, une butée arrière qui peut absorber dans la direction (x2) des forces (F1) qui sont dirigées contre la direction du siège (x1).

8. Appuie-tête selon une des revendications précédentes, **caractérisé en ce que** la surface de base comprend, au moins dans la région de la proéminence (24, 124a, 124b), au moins une surface latérale (20, 120a, 120b) qui, dans la deuxième position, forme une butée latérale qui peut absorber dans la direction (y1) des forces (F2) qui sont dirigées perpendiculairement à la direction du siège (x1).

9. Appuie-tête selon une des revendications précédentes, **caractérisé en ce que**, dans la deuxième position, la surface intérieure (18) forme une butée latérale qui peut absorber dans la direction (y2) des forces (F3) qui sont dirigées perpendiculairement à la direction du siège (x1).

10. Appuie-tête selon une des revendications précédentes, **caractérisé en ce qu'**une surface centrale (19) du corps de base (14) présente une proéminence saillant horizontalement.

11. Appuie-tête selon une des revendications précédentes, **caractérisé en ce que** l'aile (15) possède une largeur (B2) qui correspond au moins aux 2/3 de la largeur (B1) du corps de base (14).
